# EUROPÄISCHE PATENTSCHRIFT

(11) **EP 1 452 088 B1**
(45) Veröffentlichungstag und Bekanntmachung des Hinweises auf die Patenterteilung: **09.11.2005**
(21) Anmeldenummer: 04002624.7
(22) Anmeldetag: 06.02.2004
(51) Int. Cl.: A01F 29/20

(54) **Futtererntemaschine**
Forage harvester
Récolteuse de fourrage

(30) Priorität: 25.02.2003 DE 10307836
(43) Veröffentlichungstag der Anmeldung: 01.09.2004
(73) Patentinhaber: CLAAS Saulgau GmbH, 88348 Bad Saulgau (DE)
(72) Erfinder: Oliva, Christoph, 88348 Bad Saulgau (DE); Rauch, Hans, 88348 Bad Saulgau (DE); Knittel, Franz, 88348 Bad Saulgau (DE)
(74) Vertreter: Roth, Klaus

(56) Entgegenhaltungen:
- EP-A- 0 300 299
- DE-A- 3 236 984
- DE-A- 10 021 658
- DE-A- 10 021 661

## Beschreibung

Die Erfindung betrifft eine Futtererntemaschine mit einer Einzugs- und Schneidkopfeinrichtung nach dem Oberbegriff des Anspruchs 1.

Der Einsatz von Futtererntemaschinen oder sogenannten Feldhäckslern ist bei der landwirtschaftlichen Futterwerbung bereits seit langer Zeit gebräuchlich. Das Futter wie Mais oder Grünfutter wird hierbei durch einen Erntevorsatz abgeschnitten und einer Einzugs- und Schneidvorrichtung zur Zerkleinerung zugeführt. Die Einzugsvorrichtung besteht in der Regel aus zwei oder mehreren Einzugswalzen, die das Erntegut erfassen und zur Schneidvorrichtung transportieren. Die Schneidvorrichtung besteht in der Regel aus einer Messertrommel, die gegen eine feststehende Gegenschneide rotiert.

Eine solche Erntemaschine wird beispielsweise in der Druckschrift EP 300 299 beschrieben. Hierbei ist die Einzugs*- und Schneideinrichtung in einem zweigeteilten Rahmen untergebracht, wobei die Schneideinrichtung in dem statischen rückwärtigen Rahmenteil (bezogen auf die Fahrtrichtung der Maschine) und die Einzugseinrichtung im Rahmenvorderteil untergebracht ist. Um zu wartungszwecken an die im hinteren Teil untergebrachten Maschinenbereiche zu gelangen, ist der vordere Rahmenteil um eine im Wesentlichen vertikale Schwenkachse drehbar gelagert. Das Vorderteil des Rahmens schwenkt hierbei zur Seite weg, so dass der rückwärtige Teil vollständig zugänglich ist.

Weiterhin ist gemäß der DE 100 21 661 A1 eine Futtererntemaschine bekannt, wobei beim Übergang in die geöffnete Wartungsstellung das Einzugsgehäuse um eine Achse nach vorwärts und unten bewegt wird.

Die DE 32 36 984 A1 betrifft eine Futtererntemaschine, bei der der nicht teilbare Schneidkasten zu Wartungszwecken vollständig nach vorne und unten bis vor die Vorderräder aus seiner Betriebsstellung herausgezogen wird. Hierfür ist der Schneidkasten auf Winkelelementen über Rollen beweglich.

Aus der DE 100 21 658 A1 ist eine Erntemaschine bekannt, wobei ein vorsatzgetriebe und ein Zuführungsgetriebe hinter der Vorderachse der Erntemaschine in einem gemeinsamen Getriebegehäuse angeordnet ist.

Nachteilig bei diesen Vorrichtungen ist der Umstand, dass die Einzugs- und Schneideinrichtung bzw. deren Rahmen vergleichsweise weit vorne angeordnet werden muss, damit das vordere Rahmenteil vollständig zur Seite geschwenkt werden kann, ohne an die Vorderräder der Futtererntemaschine zu stoßen. Da zudem der Erntevorsatz zwangsweise vor der Einzugs- und Schneideinrichtung angeordnet werden muss, resultiert hieraus eine ungünstige Lastverteilung bzw. Schwerpunktslage der gesamten Maschine.

Aufgabe der Erfindung ist es demgegenüber, eine Futtererntemaschine vorzuschlagen, die einen möglichst weit auf die vorwärtsfahrt bezogen nach rückwärts verlagerten Schwerpunkt der Einzugs- und Schneideinrichtung bei gleichzeitig uneingeschränktem Zugang zu wartungsanfälligen Maschinenteilen gewährleistet.

Diese Aufgabe wird, ausgehend von einer Futtererntemaschine der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Futtermaschine gemäß dem Oberbegriff des Anspruchs 1 dadurch aus, dass der Übergang zwischen der geschlossenen Betriebsstellung und der geöffneten Wartungsstellung durch eine Vorwärtsbewegung und eine Seitwärtsbewegung des Rahmenvorderteils durchführbar ist, wobei wenigstens das Rahmenvorderteil um eine schwenkbare Drehachse bzw. Dreh-Schwenkachse drehbar ist. Hierdurch ist das Gewicht dieser Maschinenteile in der Betriebsstellung nach hinten verlagert, so dass sich die gewünschte günstigere Lastverteilung während des Betriebs ergibt. Darüber hinaus kann der Erntevorsatz konstruktiv derart umgestaltet werden, dass dieser zugunsten der Lastverteilung ebenfalls nach hinten verlagert wird.

Durch die günstigere Schwerpunktslage bzw. Lastverteilung ergibt sich zum einen ein stabileres Fahrverhalten der Futtererntemaschine. Darüber hinaus kann der vordere Aufbau, d.h. insbesondere der Erntevorsatz bei Bedarf jedoch auch größer und somit schwerer ausgestaltet werden. Ein weiterer Vorteil der Erfindung besteht darin, dass bei Bedarf auch die Vorderräder größer ausgebildet werden können.

Der Übergang zwischen der erfindungsgemäßen Betriebsstellung zwischen den Vorderrädern in die vor den Vorderrädern bzw. dem vorderrad angeordnete Wartungsstellung wird hierbei dadurch erreicht, dass für das Rahmenvorderteil sowohl eine Vorwärts- als auch eine Seitwärtsbewegung vorgesehen wird.

In einer vorteilhaften Ausführungsform der Erfindung wird zudem eine Vertikalbewegung des Rahmenvorderteils vorgesehen. Eine solche Vertikalbewegung, die bevorzugt als Abwärtsbewegung ausgebildet wird, verkürzt die Vorwärtsbewegung, die erforderlich ist, um das Rahmenvorderteil vor dem Laufrad anordnen zu können. Je größer der Abstand von der Radmittelebene ist, um so kleiner kann die Vorwärtsbewegung ausfallen.

Grundsätzlich ist eine erfindungsgemäße Anordnung des Rahmens bzw. der Einzugs- und Schneideinrichtung dadurch realisierbar, dass das Rahmenvorderteil z.B. durch eine Gleitlagerung, nach vorne verschiebbar oder ausziehbar und anschließend zur Seite hin verschwenkbar ausgebildet wird. In dieser Ausführungsform kann die Schwenkachse beispielsweise horizontal angeordnet werden, um die in der oben zum Stand der Technik genannten Druckschrift aufgeführten Vorteile beizubehalten.

In einer konstruktiv besonders vorteilhaften Ausführungsform wird jedoch nicht nur die Seitwärtsbewegung, sondern auch die Vorwärtsbewegung als Schwenkbewegung ausgebildet. Eine Schwenkbewegung ist konstruktiv durch das Anbringen entsprechender Schwenkachsen erheblich einfacher zu bewerkstelligen als eine Translationsbewegung, die eine entsprechende Linearführung erfordert.

Grundsätzlich kann die Vorwärtsbewegung und die Seitwärtsbewegung gleichzeitig überlagert stattfinden. Dies ist beispielsweise in einer besonders einfachen Ausführungsform dann möglich, wenn eine Schwenkbewegung um eine einzige schräg nach vorn geneigte Schwenkachse vorgesehen ist. Diese Bewegung kann ausreichen, das Vorderteil in einer Vorwärts-, Abwärts- und Seitwärtsbewegung vor das Vorderrad zu bringen. Hierbei wird die Form des Vorderrades ausgenutzt, die eine maximale Vorwärtsbewegung des beweglichen Teils der Einzug und Schneidvorrichtung vor allem auf Höhe der Radachse erfordert. Durch die Vorwärts-, Abwärtsbewegung mit Hilfe einer schräg geneigten Schwenkachse ist es somit möglich, das Vorderteil des Rahmens schräg nach vorn geneigt vor das Vorderrad zu bewegen. Diese Ausführung hat den Vorteil, dass nur eine einzige Schwenkachse vorgesehen werden muss.

In einer Weiterbildung dieser Ausführungsform kann die Schwenkachse zusätzlich seitlich geneigt werden, um die Seitwärtsbewegung zu unterstützen.

In einer anderen Ausführungsform wird eine aufeinanderfolgende Bewegung vorgesehen. Neben der Aufeinanderfolge einer Verschiebung mit einer Schwenkbewegung kann hierbei auch eine Aufeinanderfolge zweier Schwenkbewegungen in einer besonderen Ausführungsform vorgesehen werden. So kann eine zunächst vertikal stehende Schwenkachse zuerst mitsamt dem beweglichen Vorderteil des Rahmens der Schneid- und Einzugsvorrichtung um eine im Wesentlichen horizontale Schwenkachse nach vorne geneigt werden, um anschließend in der Schwenkbewegung um die in dieser Stellung schräg nach vorn geneigte Schwenkachse den rückwärtigen Teil des Rahmens freizugeben, in dem das schwenkbare Rahmenteil nach unten vorwärts vor das Vorderrad geschwenkt wird.

Eine solche Ausführungsform bietet eine konstruktive Alternative gegenüber einer festen schräg gestellten Schwenkachse und bietet darüber hinaus den Vorteil einer nach vorn geneigten Zwischenstellung, in der bestimmte Wartungs- und/oder Inspektionstätigkeiten bereits vorgenommen werden können, ohne die vollständig geöffnete Wartungsstellung einzunehmen. Insbesondere ist diese Zwischenstellung möglich, ohne den Erntevorsatz vollständig zu entfernen.

Darüber hinaus ist der aufeinanderfolgende Ablauf der beiden Schwenkbewegungen dahingehend von Vorteil, dass in der geschlossenen Betriebsstellung des Rahmenvorderteils ein seitlicher Überlapp mit dem rückwärtigen Rahmenteil möglich ist, der durch die Vorwärts-, Abwärts-, Schwenkbewegung um eine im wesentlichen horizontale Schwenkachse aufgehoben werden kann. Auf diese Weise kann dieser Überlapp aufgehoben werden bevor die seitliche Schwenkbewegung einsetzt, so dass die entsprechenden, den Überlapp herstellenden Rahmenteile bei der Seitwärtsbewegung sich nicht störend im Weg stehen.

Alle genannten Möglichkeiten liegen im Rahmen der Erfindung, sofern die erfindungsgemäße vorwärts- und Seitwärtsbewegung verwirklicht wird.

Für die Durchführung der Bewegungen wird vorzugsweise eine entsprechende Stelleinheit, beispielsweise mit einem oder mehreren Hydraulikzylindern vorgesehen. Insbesondere für das Anheben des Rahmenvorderteils mit den darin befindlichen Bestandteilen der Einzugseinrichtung ist eine Antriebsvorrichtung von Vorteil, da diese Maschinenteile ein nicht unerhebliches Gewicht aufweisen können.

Vorzugsweise wird eine Verriegelung des Rahmenvorderteils mit dem rückwärtigen Rahmenteil vorgesehen, um während des Betriebs eine Entlastung der Schwenkachse bzw. der entsprechenden Lagerung für die Bewegung des Rahmenvorderteils und eine sichere Positionierung der beiden Rahmenteile zu erzielen.

Ein Ausführungsbeispiel der Erfindung ist in der Zeichnung dargestellt und wird anhand der Figuren nachfolgend näher erläutert.

Im Einzelnen zeigen
- Figur 1: einen schematischen Längsschnitt durch eine erfindungsgemäße Futtererntemaschine,
- Figur 2: eine Darstellung der Futtererntemaschine gemäß Figur 1 in einer ersten Wartungsstellung,
- Figur 3: einen schematischen Querschnitt durch eine Futtererntemaschine gemäß Figur 1,

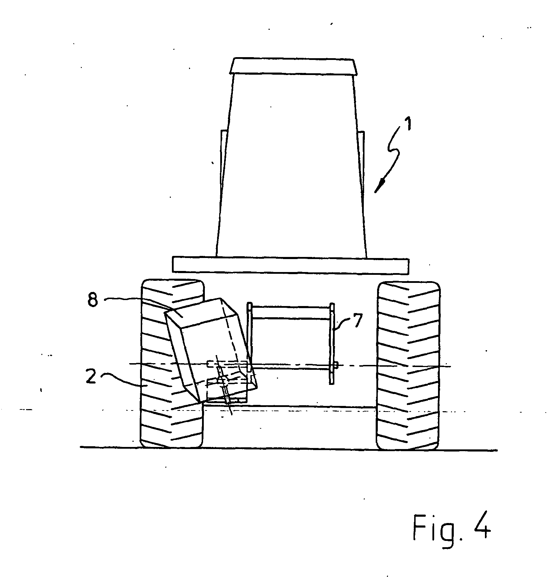

- Figur 4: eine schematische Frontansicht einer erfindungsgemäßen Futtererntemaschine,
- Figur 5: eine Ausschnittsvergrößerung der Einzugs- und Schneideinrichtung in der Frontansicht,
- Figur 6: eine Ausschnittvergrößerung mit Einzugs- und Schneideinrichtung gemäß Figur 2,
- Figur 6a: eine Vergrößerung der Darstellung gemäß Figur 6 in geschlossener Betriebsstellung,
- Figur 6b: eine Figur 6a entsprechende Darstellung bei jedoch in der nach vorn geschwenkten Zwischenstellung des Rahmenvorderteils,
- Figur 7a: eine Vergrößerung der Lagerkonstruktion des Rahmenvorderteils in geschlossener Betriebsstellung gemäß Figur 6a,
- Figur 7b: eine Figur 7a entsprechende Darstellung in nach vorn geschwenkter Zwischenstellung des Rahmenvorderteils entsprechend Figur 6b,
- Figur 8: einen Schnitt durch Schnittlinie VIII in Figur 7a.

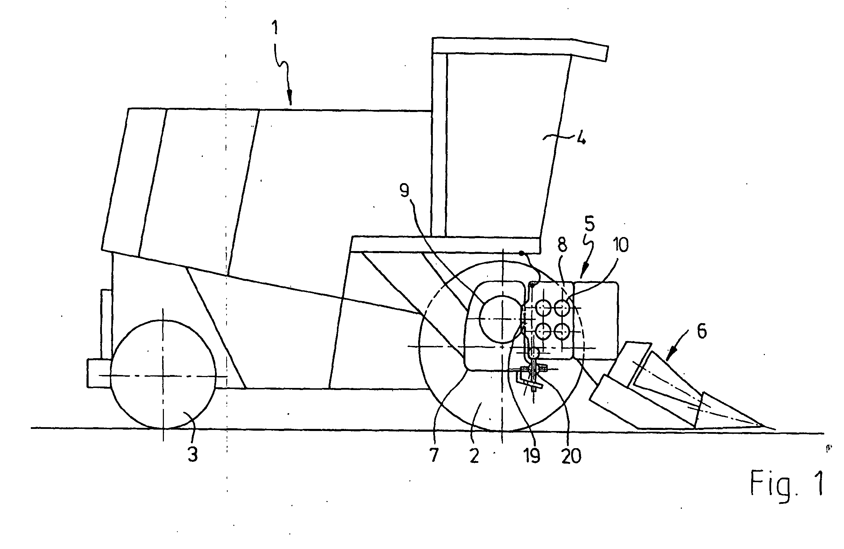

Figur 1 zeigt die Futtererntemaschine 1, die als selbstfahrende Maschine mit Vorderrädern 2 und Hinterrädern 3 ausgebildet ist. Üblicherweise sind derartige Maschinen über die Hinterräder 3 lenkbar.

Unterhalb der Fahrerkabine 4 befindet sich das Vorderrad 2. Zwischen den Vorderrädern 2 ist die Einzugs- und Schneideinrichtung 5 hinter einem Erntevorsatz 6 angebracht. Die Einzugs- und Schneideinrichtung ist mit einem zweiteiligen Rahmen ausgestattet, der ein rückwärtiges Rahmenteil 7 und ein Rahmenvorderteil 8 umfasst. Im rückwärtigen Teil 7 sind eine Messertrommel 9, im Rahmenvorderteil 8 vier paarweise zugeordnete Einzugswalzen 10 angedeutet. In dieser Betriebsstellung gemäß Figur 1 befindet sich das Rahmenvorderteil 8 zumindest teilweise zwischen den Vorderrädern 2.

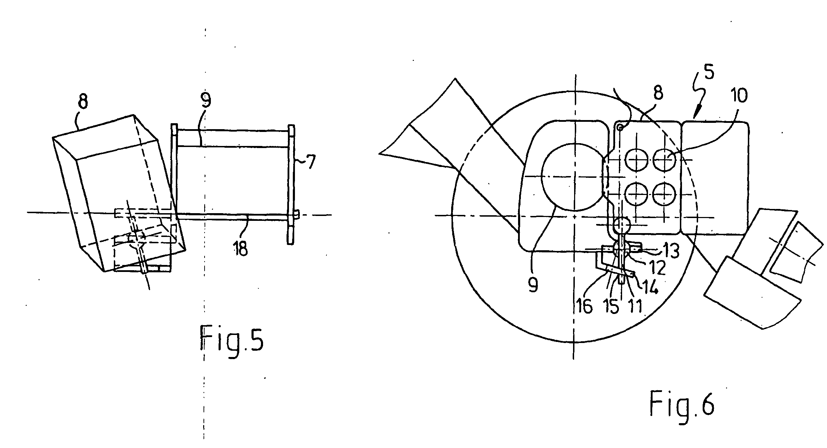

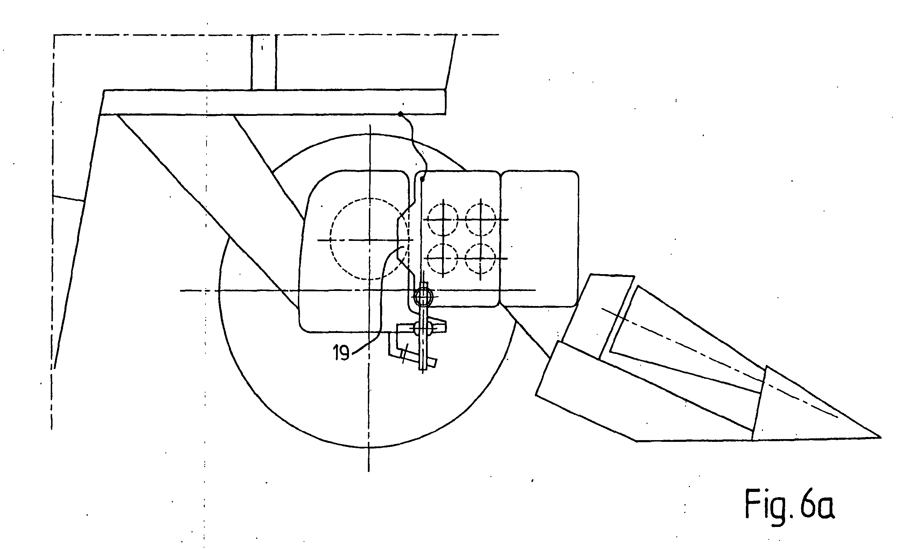

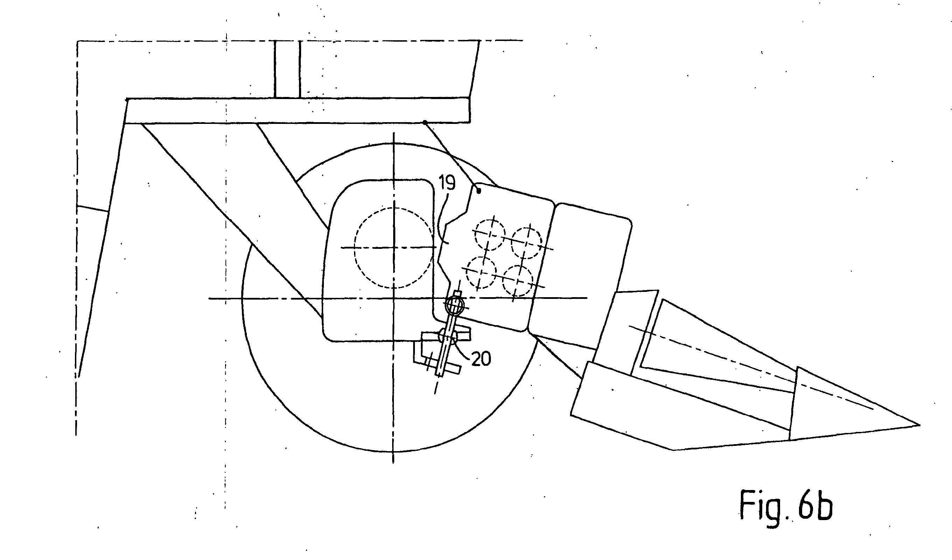

Das Rahmenvorderteil 8 ist mit einer Schwenkachse 11 (vgl. Figur 6) in einem Lagerauge 12 schwenkbar gelagert. Das Auge 12 ist außenseitig mit einer sphärischen Kontur versehen und in einer Lagerplatte 13, die eine entsprechende Innenkontur aufweist, drehbar gelagert. Durch die sphärische Form des Lagerauges 12 ist die Schwenkachse 11 grundsätzlich in alle Richtungen schwenkbar.

Die möglichen Schwenkbewegungen sind durch eine Gabel 14 eingeschränkt, innerhalb der die Schwenkachse 11 mit ihrem äußeren Ende 15 geführt ist. Die Basis 16 der Gabel 14 bildet zugleich einen Anschlag für die Schwenkachse 11.

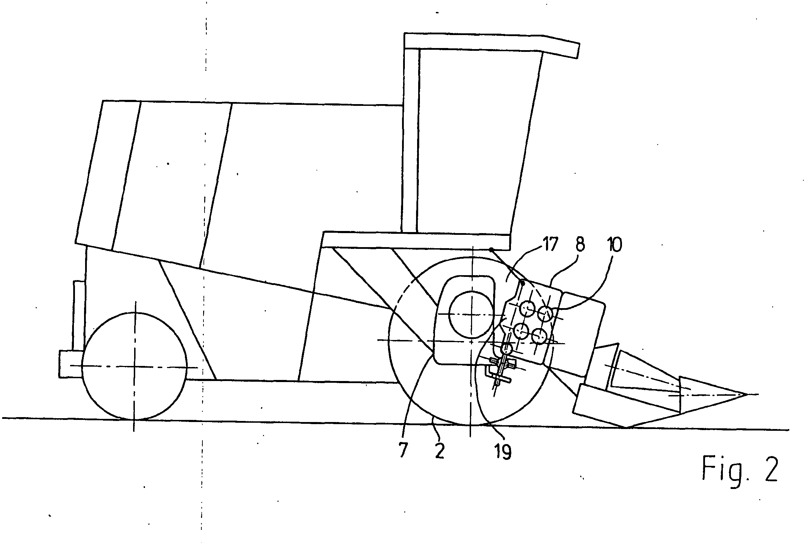

Für die Wartung der Einzugs- und Schneideinrichtung 5 wird zunächst das Rahmenvorderteil 8 nach vorne abwärts um eine horizontale Achse geschwenkt. Diese Zwischenposition, in der das Ende 15 am Anschlag 16 der Gabel 14 anschlägt, ist in Figur 2 dargestellt. Es handelt sich hierbei um eine erste Wartungsstellung, in der von der Oberseite her ein Sicht- und Durchgriffsspalt 17 zur Messertrommel geöffnet ist. In der Darstellung gemäß Figur 2 ist weiterhin erkennbar, dass die erste Wartungsstellung, die durch die Schwenkbewegung nach vorwärts/abwärts des Rahmenvorderteils 8 erreicht wird, der Erntevorsatz 6 nicht von der Futtererntemaschine 1 entfernt werden muss.

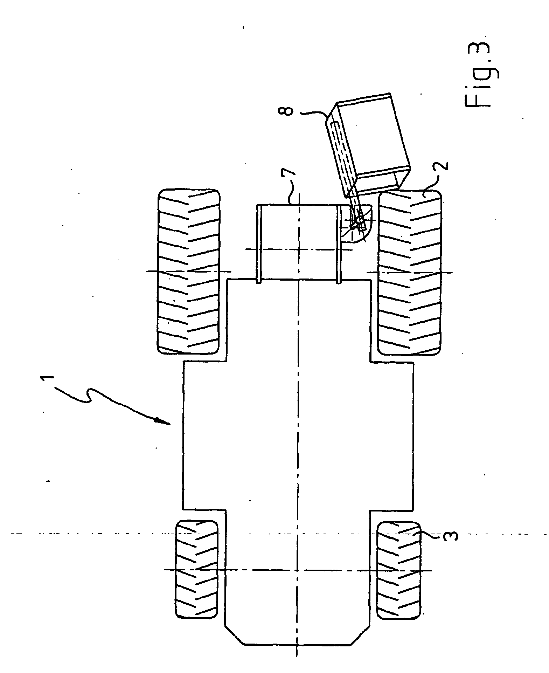

Zur vollständigen Zugänglichkeit des rückwärtigen Rahmenteils 7 mit der Messertrommel 9 wird anschließend in einer zweiten Schwenkbewegung das Rahmenvorderteil 8 um die in dieser Zwischenposition schräg nach vorne geneigte Achse der Schwenkachse 11 zur Seite geschwenkt. Diese Endposition, in der das rückwärtige Rahmenteil 7 von vorne vollständig zugänglich ist, ist in Figur 3 dargestellt. Hierbei ist insbesondere auch erkennbar, dass sich das Rahmenvorderteil 8 vor dem Vorderrad 2 befindet.

Die zweite vollständig geöffnete Wartungsstellung gemäß Figur 3 ist nur durch die vorherige Abwärtsbewegung und der so hergestellten Schrägstellung der Schwenkachse 11 und der vorherigen nach vorn Bewegung, so dass die seitlichen Überlappungen 19 des Einzuges die Trommel nicht mehr überstreichen, erreichbar.

In der Ausschnittsvergrößerung gemäß Figur 5 ist erkennbar, dass nahezu die gesamte Öffnung des rückwärtigen Rahmenteils 7 und somit die Messertrommel 9 ebenso wie eine angedeutete Gegenschneide 18 frei zugänglich ist. Das Rahmenvorderteil 8 befindet sich fast vollständig seitlich von dem rückwärtigen Rahmenteil 9.

Insbesondere in den Figuren 6a und 6b ist erkennbar, dass in der geschlossenen Betriebsstellung ein Seitenvorsprung 19 des Rahmenvorderteils 8 das rückwärtige Rahmenteil 7 beidseitig umgreift, so dass ein Überlapp entsteht. Durch die zunächst erfolgende Schwenkbewegung um eine horizontale Schwenkachse 20 wird dieser Überlapp aufgelöst, indem die Seitenvorsprünge 19 vor dem rückwärtigen Rahmenteil 7 zu liegen kommen. Auf diese Weise kann die anschließende Seitwärts-/Abwärtsverschwenkung stattfinden, ohne dass der Seitenvorsprung 19 mit dem rückwärtigen Rahmenteil 7 bzw. den darin untergebrachten Maschinenkomponenten kollidiert.

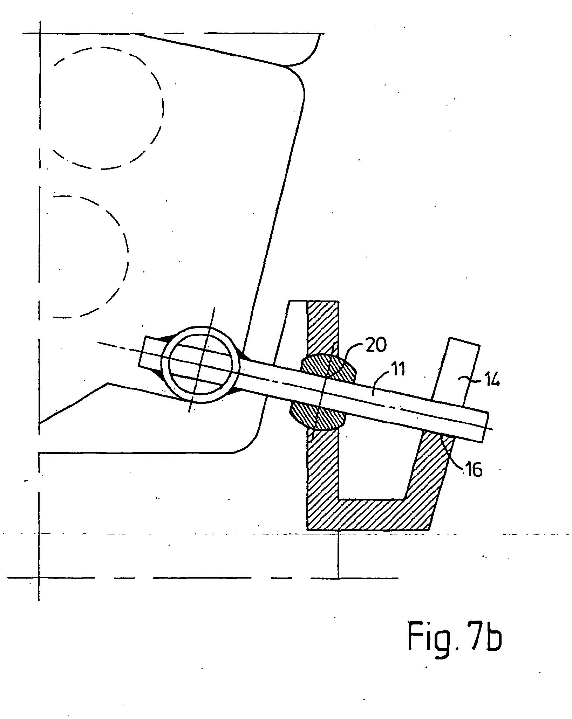

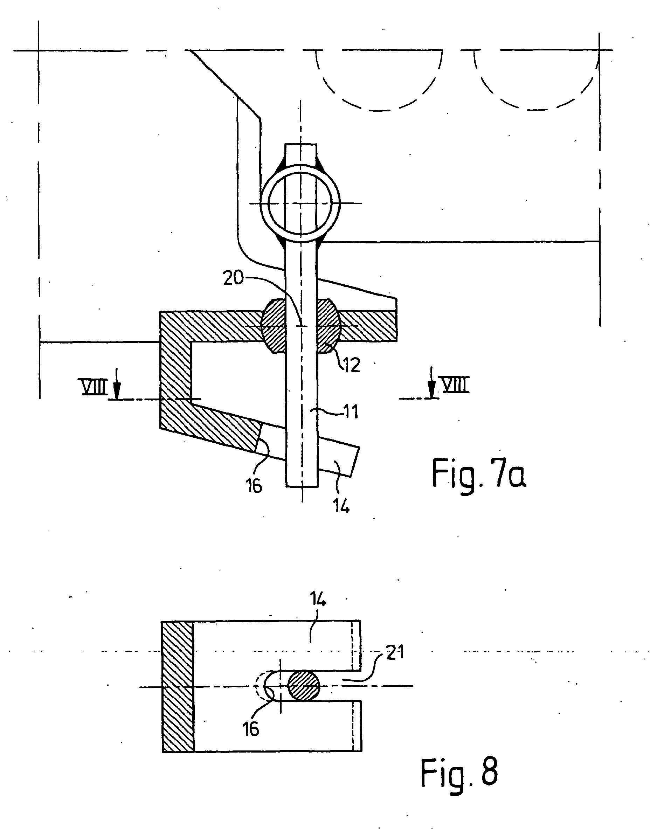

Die Lagerkonstruktion der Schwenkachse 11 mit Hilfe des Lagerauges 12 und der Gabel 14, die insbesondere in den Figuren 7a, b sowie Figur 8 dargestellt ist, ergibt die Möglichkeit, auch bei seitwärts schräg geneigter Schwenkachse 11 zunächst eine Schwenkbewegung um eine horizontale Schwenkachse 20, die durch den Mittelpunkt des Lagerauges 12 definiert ist, durchzuführen. Die Position des Führungsspaltes 21 der Gabel 14 im Bezug zum Lagerauge 12 bestimmt hierbei die Seitwärtsneigung der Schwenkachse 11

Nach der Schwenkbewegung um die horizontale Schwenkachse 20 liegt die Stellung gemäß Figur 7b vor, in der die Schwenkachse 11 an der Basis 16 der Gabel 14 anschlägt. In dieser Stellung ist wie oben beschrieben der Überlapp der Seitenvorsprünge 19 mit dem rückwärtigen Rahmenteil 7 aufgelöst, so dass nunmehr die Schwenkbewegung um die schräg nach vorne und gegebenenfalls seitwärts geneigte Schwenkachse 11 möglich ist, ohne dass der Seitenvorsprung 19 mit dem rückwärtigen Rahmenteil 7 bzw. darin untergebrachten Maschinenkomponenten kollidiert.

Durch die erfindungsgemäße Bauweise ist es möglich, die Einzugs- und Schneideinrichtung 5 weiter nach hinten in den Bereich zwischen den Vorderrädern 2 zu verlagern, wodurch grundsätzlich auch der Erntevorsatz 6 weiter nach hinten verlagert werden kann. Es ergibt sich hierbei insgesamt eine wesentlich günstigere Lastverteilung. Diese günstigere Lastverteilung kann beispielsweise für eine bessere Fahrstabilität oder für größere und schwerere Maschinenteile, insbesondere im Bereich des Erntevorsatzes 6 genutzt werden.

### Bezugszeichenliste:

- 1: Futtererntemaschine
- 2: Vorderrad
- 3: Hinterrad
- 4: Fahrkabine
- 5: Einzugs- und Schneideinrichtung
- 6: Erntevorsatz
- 7: Rückwärtiges Rahmenteil
- 8: Rahmenvorderteil
- 9: Messertrommel
- 10: Einzugswalze
- 11: Schwenkachse
- 12: Lagerauge
- 13: Lagerplatte
- 14: Gabel
- 15: Ende
- 16: Basis
- 17: Sicht- und Durchgriffsspalt
- 18: Gegenschneide
- 19: Seitenvorsprung
- 20: Horizontale Schwenkachse
- 21: Führungsspalt

## Patentansprüche

1. Futtererntemaschine (1) mit einer Einzugs- und Schneidkopfeinrichtung (5), die einen Rahmen (7, 8) umfasst, der einen rückwärtigen Rahmenteil (7) und ein Rahmenvorderteil (8) aufweist, wobei wenigstens ein Teil der Einzugs- und Schneideinrichtung (5) im Rahmenvorderteil (8) und wenigstens ein Teil der Einzugs- und Schneidvorrichtung (5) im rückwärtigen Rahmenteil (7) angeordnet sind und wenigstens das Rahmenvorderteil (8) zwischen einer geschlossenen Betriebsstellung und einer geöffneten Wartungsstellung, in der der rückwärtige Rahmenteil (7) zur Wartung zugänglich ist, hin und her bewegbar ausgebildet ist, wobei das Rahmenvorderteil (8) in Betriebsstellung, quer zur Fahrtrichtung gesehen, in der Projektion der Vorderräder (2), wenigstens teilweise zwischen diesen und in der geöffneten Wartungsstellung wenigstens teilweise vor einem der Vorderräder (2) angeordnet ist, **dadurch gekennzeichnet, dass** der Übergang zwischen der geschlossenen Betriebsstellung und der geöffneten Wartungsstellung durch eine vorwärtsbewegung und eine Seitwärtsbewegung des Rahmenvorderteils (8) durchführbar ist, wobei wenigstens das Rahmenvorderteil um eine schwenkbare Drehachse (11, 20) drehbar ist.

2. Maschine nach Anspruch 1, **dadurch gekennzeichnet, dass** eine Vertikalbewegung des Rahmenteils (8) vorgesehen ist.

3. Maschine nach Anspruch 1 oder 2, **dadurch gekennzeichnet, dass** die Seitwärtsbewegung als Drehbewegung um die Drehachse (11) vorgesehen ist.

4. Maschine nach einem der vorgenannten Ansprüche, **dadurch gekennzeichnet, dass** die Vorwärtsbewegung als Schwenkbewegung um eine Schwenkachse (20) vorgesehen ist.

5. Maschine nach einem der vorgenannten Ansprüche, **dadurch gekennzeichnet, dass** die Seitwärtsbewegung und die vorwärtsbewegung gleichzeitig überlagert sind.

6. Maschine nach einem der vorgenannten Ansprüche, **dadurch gekennzeichnet, dass** die vorwärtsbewegung und die Seitwärtsbewegung nacheinander folgend vorgesehen sind.

7. Maschine nach einem der vorgenannten Ansprüche, **dadurch gekennzeichnet, dass** eine schräg nach vorne geneigte Schwenkachse (11) für die Seitwärts- und/oder Vorwärtsbewegung und/oder Vertikalbewegung des Rahmenvorderteils (8) vorgesehen ist.

8. Maschine nach einem der vorgenannten Ansprüche, **dadurch gekennzeichnet, dass** eine seitwärts geneigte Schwenkachse (11) für die Seitwärts- und/oder Vorwärtsbewegung und/oder Vertikalbewegung vorgesehen ist.

9. Maschine nach einem der vorgenannten Ansprüche, **dadurch gekennzeichnet, dass** eine im Wesentlichen horizontale Schwenkachse für die Vorwärtsbewegung vorgesehen ist.

10. Maschine nach einem der vorgenannten Ansprüche, **dadurch gekennzeichnet, dass** eine um eine horizontale Schwenkachse nach vorn schwenkbare Schwenkachse (11) vorgesehen ist.

11. Maschine nach einem der vorgenannten Ansprüche, **dadurch gekennzeichnet, dass** ein Linearführung für das Rahmenvorderteil nach vorne vorgesehen ist.

12. Maschine nach einem der vorgenannten Ansprüche, **dadurch gekennzeichnet, dass** das Rahmenvorderteil zusammen mit einer Schwenkachse nach vorn verschiebbar ausgebildet ist.

13. Maschine nach einem der vorgenannten Ansprüche, **dadurch gekennzeichnet, dass** ein Antrieb für die Durchführung der vorwärts- und/oder Seitwärtsbewegung vorgesehen ist.

14. Maschine nach einem der vorgenannten Ansprüche, **dadurch gekennzeichnet, dass** eine Verriegelung der Betriebs- und/oder Wartungsstellung vorgesehen ist.

## Claims

1. Forage harvester (1) with a feed and cutting head device (5), which comprises a frame (7, 8), which has a rear frame part (7) and a front frame part (8), wherein at least a part of the feed and cutting device (5) is arranged in the front frame part (8) and at least a part of the feed and cutting device (5) is arranged in the rear frame part (7) and at least the front frame part (8) is configured so as to be movable back and forth between a closed operating position and an open maintenance position, in which the rear frame part (7) is accessible for maintenance, the front frame part (8) being arranged, in the operating position, viewed transverse to the direction of travel, in the projection of the front wheels (2), at least partially between them and, in the open maintenance position, being arranged at least partially in front of one of the front wheels (2), **characterised in that** the transition between the closed operating position and the open maintenance position can be effected by means of a forward movement and a sideways movement of the front frame part (8), wherein at least the front frame part can be rotated about a swivellable pivot pin (11, 20).

2. Machine according to claim 1, **characterised in that** a vertical movement of the frame part (8) is provided.

3. Machine according to claim 1 or 2, **characterised in that** the sideways movement is provided as a rotary movement about the pivot pin (11).

4. Machine according to any one of the preceding claims, **characterised in that** the forward movement is provided as a swivelling movement about a swivel pin (20).

5. Machine according to any one of the preceding claims, **characterised in that** the sideways movement and the forward movement are combined simultaneously.

6. Machine according to any one of the preceding claims, **characterised in that** the forward movement and the sideways movement are provided one after the other.

7. Machine according to any one of the preceding claims, **characterised in that** a swivel pin (11), which is inclined obliquely forward, is provided for the sideways and/or forward movement and/or vertical movement of the front frame part (8).

8. Machine according to any one of the preceding claims, **characterised in that** a swivel pin (11), which is inclined sideways, is provided for the sideways and/or.forward movement and/or vertical movement.

9. Machine according to any one of the preceding claims, **characterised in that** a substantially horizontal swivel axis is provided for the forward movement.

10. Machine according to any one of the preceding claims, **characterised in that** a swivel pin (11) which can be swivelled forward about a horizontal swivel axis is provided.

11. Machine according to any one of the preceding claims, **characterised in that** a linear guide is provided at the front for the front frame part.

12. Machine according to any one of the preceding claims, **characterised in that** the front frame part is configured so as to be displaceable forward together with a swivel pin.

13. Machine according to any one of the preceding claims, **characterised in that** a drive is provided to carry out the forward and/or sideways movement.

14. Machine according to any one of the preceding claims, **characterised in that** a lock is provided for the operating and/or maintenance position.

## Revendications

1. Machine à récolter le fourrage (1) ayant un dispositif d'entrée et de tête de coupe (5) qui comporte un cadre (7, 8), lequel présente une partie de cadre arrière (7) et une partie avant de cadre (8), au moins une partie du dispositif d'entrée et de tête de coupe (5) étant agencée dans la partie avant de cadre (8) et au moins une partie du dispositif d'entrée et de tête de coupe (5) étant agencée dans la partie de cadre arrière (7) et au moins la partie avant de cadre (8) étant réalisée mobile dans un mouvement de va-et-vient entre une position de fonctionnement fermée et une position d'entretien ouverte, dans laquelle la partie de cadre arrière (7) est accessible pour l'entretien, la partie avant de cadre (8) étant agencée, en position de fonctionnement, dans la projection des roues avant (2), vu transversalement au sens de la marche, au moins partiellement entre celles-ci et, en position d'entretien ouverte, au moins partiettement devant l'une des roues avant (2),
**caractérisée en ce que** le passage entre la position de fonctionnement fermée et la position d'entretien ouverte est réalisable par un mouvement vers l'avant et un mouvement latéral de la partie avant de cadre (8), au moins la partie avant de cadre pouvant être tournée autour d'un axe de rotation (11, 20) pivotant.

2. Machine selon la revendication 1,
**caractérisée en ce qu'**il est prévu un mouvement vertical de la partie de cadre (8).

3. Machine selon la revendication 1 ou 2,
**caractérisée en ce que** le mouvement latéral est prévu en tant que mouvement rotatif autour de l'axe de rotation (11).

4. Machine selon l'une des revendications précédentes,
**caractérisée en ce que** le mouvement vers l'avant est prévu en tant que mouvement de pivotement autour d'un axe de pivotement (20).

5. Machine selon l'une des revendications précédentes,
**caractérisée en ce que** le mouvement latéral et le mouvement vers l'avant ont lieu simultanément.

6. Machine selon l'une des revendications précédentes,
**caractérisée en ce que** le mouvement vers l'avant et le mouvement latéral sont prévus l'un après l'autre.

7. Machine selon l'une des revendications précédentes,
**caractérisée en ce qu'**un axe de pivotement (11) incliné obliquement vers l'avant est prévu pour le mouvement latéral et/ou le mouvement vers l'avant et/ou le mouvement vertical de la partie avant de cadre (8).

8. Machine selon l'une des revendications précédentes,
**caractérisée en ce qu'**un axe de pivotement (11) incliné latéralement est prévu pour le mouvement latéral et/ou le mouvement vers l'avant et/ou le mouvement vertical.

9. Machine selon l'une des revendications précédentes,
**caractérisée en ce qu'**un axe de pivotement essentiellement horizontal est prévu pour le mouvement vers l'avant.

10. Machine selon l'une des revendications précédentes,
**caractérisée en ce qu'**il est prévu un axe de pivotement (11) pouvant être pivoté vers l'avant autour d'un axe de pivotement horizontal.

11. Machirie selon l'une des revendications précédentes,
**caractérisée en ce qu'**il est prévu un guidage linéaire vers l'avant pour la partie avant de cadre.

12. Machine selon l'une des revendications précédentes,
**caractérisée en ce que** la partie avant de cadre est réalisée de manière à pouvoir être déplacée vers l'avant en même temps qu'un axe de pivotement.

13. Machine selon l'une des revendications précédentes,
**caractérisée en ce qu'**il est prévu un entraînement pour la réalisation du mouvement vers l'avant et/ou du mouvement latéral.

14. Machine selon l'une des revendications précédentes,
**caractérisée en ce qu'**il est prévu un verrouillage de la position de fonctionnement et/ou d'entretien.
